# EUROPÄISCHE PATENTSCHRIFT

(11) **EP 1 781 432 B1**
(45) Veröffentlichungstag und Bekanntmachung des Hinweises auf die Patenterteilung: **19.03.2008**
(21) Anmeldenummer: 05766128.2
(22) Anmeldetag: 19.07.2005
(51) Int. Cl.: B21D 39/02, G05B 19/18

(54) **VERFAHREN ZUR FERTIGUNG VON AUTOMOBILANBAUTEILEN**
METHOD FOR PRODUCING AUTOMOTIVE PARTS
PROCEDE POUR FABRIQUER DES PIECES RAPPORTEES POUR AUTOMOBILES

(30) Priorität: 17.08.2004 DE 102004039882
(43) Veröffentlichungstag der Anmeldung: 09.05.2007
(73) Patentinhaber: GM Global Technology Operations, Inc., Detroit, MI 48265-3000 (US)
(72) Erfinder: BAUMGARTEN, Jens, 60385 Frankfurt (DE); LENHART, Oliver, 55129 Mainz (DE); PLAPPER, Peter, 65428 Rüsselsheim (DE)
(74) Vertreter: Strauss, Peter
(86) Internationale Anmeldenummer: PCT/EP2005/007842
(87) Internationale Veröffentlichungsnummer: WO 2006/018090

(56) Entgegenhaltungen:
- EP-A- 1 041 130
- DE-A1- 4 420 085
- LIVATYALI H ET AL: "Experimental investigation on forming defects in flat surface-convex edge hemming: roll, recoil and warp" JOURNAL OF MATERIALS PROCESSING TECHNOLOGY, ELSEVIER, AMSTERDAM, NL, Bd. 153-154, 10. November 2004 (2004-11-10), Seiten 913-919, XP004637535 ISSN: 0924-0136

## Beschreibung

Im Stand der Technik sind Verfahren zum Herstellen von Automobilanbauteilen bekannt, bei denen ausgehend von metallischen Bauelementen wie Blechtafelabschnitten o.ä. unter Anwendung von Umformschritten ein Bauteil einer Karosserie eines Kraftfahrzeugs hergestellt wird. Anschließend wird das Bauteil häufig unter Wärmeeinwirkung oberflächenbehandelt.

Die EP 1 041 130 A2 zeigt eine Bördelfalzversiegelung von Karosseriebauteilen von Kraftfahrzeugen, wie z.B. von Türen, Heck- bzw. Frontklappen oder Schiebedachdeckeln. Das dafür eingesetzte Verfahren beruht auf einer Vorvernetzung der Versiegelungsmasse im Karosserie-Rohbau durch UV-Bestrahlung. In einem zweiten, direkt nachfolgenden Schritt wird durch thermische Einwirkung der Bördelfalzklebstoff und die Versiegelungsmasse angehärtet. Danach werden die Karosseriebauteile einer Hitzehärtung in einem KTL-Ofen ausgesetzt.

Betrachtet man die Geometrie des so hergestellten Automobilanbauteils in den einzelnen Herstellungsstufen genauer so stellt man fest, dass dieses seine Form erheblich ändert.

So ist es bekannt, dass aufgrund der federnden bzw. elastischen Eigenschaften des eingesetzten Metallblechs bei den Umformschritten kompliziert vorherzusagende Effekte auftreten, insbesondere beim Abkanten (engl. "flanging"), beim Vorbördeln (engl. "pre-hemming") und beim Fertigbördeln (engl. "final hemming"). Zhang, G., Hao, H., Wu, X., Hu, S.J., Harper, K., und Faitel, W., 2000, in "An experimental investigation of curved surface-straight edge hemming", J. of Manufacturing Processes, Vol. 2 No.4, p. 241-246 sowie Zhang, G., Wu, X. und Hu, S.J., 2001 in "A study on fundamental mechanisms of warp and recoil in hemming", J. of Engineering Materials and Technology, Vol. 123, No.4, p. 436-441, haben hierzu eingehendere Untersuchungen angestellt.

Demzufolge weisen Karosserieanbauteile und vor allem Hauben nach dem Vor- und Fertigbördeln auf Bördelwerkzeugen mit nomineller Geometrie der Werkzeugwirkflächen, d.h. die Geometrie der dafür verwendeten Werkzeuge entspricht der nominellen Geometrie des zu bördelnden Bauteils, Abweichungen von ihrer nominellen Geometrie auf. Dies wird vor allem auf die Phänomene "roll-in, roll-out, warp, recoil" zurückgeführt.

Auch nach dem Durchlauf durch die kataphoretische Tauchlackierung und nach der anschließenden Ofentrocknung weisen die Bauteile wieder erhebliche Abweichungen von ihrer nominellen Geometrie auf. Für diese Abweichungen gibt es mehrere mögliche Ursachen. So werden während der umformenden Herstellung (Tiefziehen, Beschnitt, Abkanten, Nachschlagen, Bördeln) in die Hauben eingebrachte Eigenspannungen abgebaut. Hinzu kommt, dass etwaige verwendete Bördelflansch- und Unterfütterungskleber ein anderes Wärmeausdehnungsverhalten als die metallischen, häufig aus Stahl bestehenden Komponenten haben. Schließlich bewirkt ein Aushärten der Kleber ein "Einfrieren" der wärmedehnungsbedingt abweichenden Geometrie der Haube am Ende des KTL-Durchlaufs. Die im Zuge der kataphoretischen Tauchlackierung und der anschließenden Ofentrocknung entstehenden Maßabweichungen werden wenn möglich durch zeit- und kostenaufwändige Produkt- und/oder Prozessänderungen sowie ein ggf. notwendiges manuelles Richten kompensiert.

Es ist Aufgabe der Erfindung, ein Verfahren bereitzustellen, bei dem die Probleme des Standes der Technik vermieden werden.

Diese Aufgabe wird durch den Gegenstand des unabhängigen Patentansprus 1 gelöst. Vorteilhafte Ausgestaltungen ergeben sich aus den abhängigen Patentansprüchen.

Gemäß der Erfindung werden zunächst von Werkzeuggeometriedaten von für das Umformen zu verwendenden Werkzeugen, von nominellen Geometriedaten des Bauteils sowie von zulässigen Toleranzen dieser nominellen Geometriedaten des Bauteils vorgegeben. Anschließend werden die Prozessschritte des Umformens unter Verwendung der Werkzeuggeometriedaten simuliert und die danach zu erwartenden Geometriedaten des Bauteils berechnet.

Wenn eine anschließende Überprüfung ergibt, dass die zu erwartenden Geometriedaten des Bauteils nicht im zulässigen Toleranzbereich der nominellen Geometriedaten des Bauteils liegen, dann werden die Werkzeuggeometriedaten solange zu korrigierten Werkzeuggeometriedaten verändert, bis sich bei einem anschließenden erneuten Durchführen der vorhergehenden Schritte unter Verwendung der korrigierten Werkzeuggeometriedaten ergibt, dass die zu erwartenden Geometriedaten des Bauteils im zulässigen Toleranzbereich der nominellen Geometriedaten des Bauteils liegen.

Nach der Erfindung werden erst danach die Prozessschritte des Oberflächenbehandelns unter Wärmeeinwirkung simuliert, wobei dabei die danach zu erwartenden Geometriedaten des Bauteils ermittelt werden. Dabei kann unter "Oberflächenbehandeln unter Wärmeeinwirkung" jede mögliche weitere Behandlung verstanden, bei der Wärme entsteht oder zugeführt wird, also beispielsweise auch eine Bördelfalzversiegelung von Karosseriebauteilen von Kraftfahrzeugen, wie z.B. von Türen, Heck- bzw. Frontklappen oder Schiebedachdeckeln, wie sie in der EP 1 041 130 A2 gezeigt. Bei der dort eingesetzten Vorvernetzung der Versiegelungsmasse durch UV-Bestrahlung und bei der nachfolgenden thermischen Einwirkung auf den Bördelfalzklebstoff und die Versiegelungsmasse zur Anhärtung entstehen nämlich ebenfalls Verzüge und Dehnungen, die erfindungsgemäß erst im zweiten Interationsschritt zu berücksichtigen sind. Erst recht gilt dies für die anschließende Hitzehärtung der Karosseriebauteile in einem KTL-Ofen. Diese Aufteilung der erfindungsgemäßen Optimierung in zwei oder mehr Iterationsschritte hat sich sehr bewährt. Dies wird darauf zurückgeführt, dass die zu erwartenden Fehler aus dem Umformen des Bauteils anderer Natur sind als diejenigen aus der anschließenden Wärmebehandlung desselben. Dementsprechend werden die zu erwartenden Fehler aus dem Umformen des Bauteils im ersten Iterationsschritt berücksichtigt. Alle weiteren Iterationsschritte betreffen dann Nachbehandlungen des Bauteils, bei denen keine Umformungen mehr vorgenommen werden.

Solange dabei festgestellt wird, dass die zu erwartenden Geometriedaten des Bauteils NICHT im zulässigen Toleranzbereich der nominellen Geometriedaten des Bauteils liegen, werden die nominellen Geometriedaten des Bauteils verändert, korrigierte Geometriedaten des Bauteils erzeugt und anschließend die obenstehenden Schritte erneut durchgeführt, wobei jedoch die korrigierten Geometriedaten des Bauteils anstelle der nominellen Geometriedaten des Bauteils verwendet werden.

Zusammenfassend kann gesagt werden, dass hier eine zweistufige Iteration erfolgt, die sehr schnell zu guten Ergebnissen führt.

Erst danach wird mit einer Fertigung bzw. Massenfertigung des Bauteils unter Verwendung der korrigierten Geometriedaten des Bauteils sowie der korrigierten Werkzeuggeometriedaten begonnen.

Gemäß der Erfindung können auch Validierungsläufe als Einzelfertigung des Bauteils unter Verwendung der nominellen Geometriedaten bzw. gegebenenfalls der korrigierten Geometriedaten des Bauteils sowie unter Verwendung der Werkzeuggeometriedaten bzw. gegebenenfalls der korrigierten Werkzeuggeometriedaten vorgesehen sein. Dabei wird überprüft, ob die realen Geometriedaten des Bauteils mit den berechneten Geometriedaten übereinstimmen. Daraus können Rückschlüsse auf die Qualität der eingesetzten Simulationsverfahren gezogen werden.

Die Erfindung vermeidet es, die Abweichungen der Geometrie der Karoseriebauteile von der nominellen Geometrie durch aufwändige manuelle Einarbeitungen der Bördelwerkzeuge zu reduzieren oder zu minimieren, indem die Geometrie der Wirkflächen der Werkzeuge korrigiert wird. Eine solche Korrektur kann häufig nur intuitiv, iterativ und basierend auf dem Erfahrungswissen des Einarbeiters erfolgen und wird häufig nicht dokumentiert, was besonders nachteilig ist.

Die Erfindung stellt vielmehr ein simulationsgestütztes Verfahren zur Reduzierung der zur Fertigung von Automobilanbauteilen wie Hauben, Rückwandklappen und Türen notwendigen Bördeloperationen bereit, das sich besonders vorteilhaft anwenden lässt, wenn Bördeloperationen mit einem anschließenden Durchlauf durch eine kataphoretische Tauchlackierung (KTL) vorgesehen sind. Es hat sich nämlich herausgestellt, dass dabei besonders häufig Maßabweichungen auftreten. Das erfindungsgemäße Verfahren lässt sich aber auch auf alle anderen Herstellungsverfahren anwenden, bei denen Umformungsverfahren mit anschließenden Wärmebehandlungen, etwa für Lackierungen o.ä. vorgesehen sind.

Mit der Erfindung werden unter Verwendung eines rechner- bzw. simulationsgestützten Verfahrens proaktiv die aus den Bördeloperationen und dem KTL-Durchlauf resultierenden Maßabweichungen von Karosserieanbauteilen ermittelt und anschließend reduziert. Dabei wird die gesamte Umform- und Fügegeschichte des Karosserieanbauteils berücksichtigt.

Die Erfindung stellt ein simulationsgestütztes Verfahren zur Reduzierung der aus den zur Fertigung von Automobilanbauteilen (Hauben, Rückwandklappen, Türen) notwendigen Bördeloperationen (Vor- und Fertigbördeln) und der aus dem anschließenden Durchlauf der kataphoretischen Tauchlackierung (KTL) resultierenden Maßabweichungen bereit.

Das erfindungsgemäße Verfahren stellt eine Abfolge von Simulationen, Vergleichen von Datensätzen und Geometriemanipulationen dar. Zur Reduzierung des Benutzeraufwandes ist das Verfahren durch die Verwendung sog. Shell-Scripten zu automatisieren. Die notwendigen Vergleiche von Datensätzen und die Geometriemanipulationen sind zweckmäßigerweise in einer höheren Programmiersprache zu realisieren. Die Benutzerführung ist über ein GUI (graphical user interface) bzw. über eine graphische Benutzerschnittstelle zu realisieren.

Das Hauptanwendungsfeld des Verfahrens ist der hier geschilderte "Frontloading" Fall, bei dem das Verfahren dazu verwendet wird, schon vor der Werkzeugfertigung die optimale Werkstückgeometrie sowie die optimalen Werkzeugwirkflächengeometrien zu ermitteln. Das Verfahren ist jedoch ebenfalls zur Unterstützung des Einarbeitungsvorgangs von bereits existierenden Bördelwerkzeugen anwendbar. In diesem Fall sind die Wirkflächen der Werkzeuge mittels optischer Messtechnik zu erfassen und anstelle der nominalen Daten als Eingangsdaten für die Simulationen in Verfahrensschritt 1 zu verwenden.

Aus der Anwendung der Erfindung ergeben sich zahlreiche Vorteile, nämlich eine Reduzierung des Arbeitsaufwandes bei der Einarbeitung der Bördelwerkzeuge, da Werkzeugwirkflächen nach den optimalen Daten gefertigt werden können. Im Idealfall fallen solche Einarbeitungen der Bördelwerkzeuge weg. Dadurch ergeben sich direkte Kosteneinsparungen in Form von "Mannstunden", ein sicherer Serienanlauf und eine steilere Anlaufkurve.

Die Auslegung der Bördelwerkzeuge erfolgt nicht mehr intuitiv erfahrungsbasiert sondern wissensbasiert. Das dazu verwendete Wissen ist im Verfahren gespeichert und jederzeit verfügbar. Man ist nicht mehr auf Expertenwissen angewiesen, das durch Krankheit, Urlaub usw. ggf. im entscheidenden Moment häufig nicht verfügbar ist.

Der Arbeitsaufwand für Produkt- und/oder Prozessänderungen sowie für ein gegebenenfalls notwendiges manuelles Richten der Anbauteile nach dem KTL-Durchlauf und der Ofentrocknung wird entscheidend reduziert bzw. fällt sogar ganz weg.

Ausschuss aufgrund nicht mehr zu richtender Anbauteile, wenn die Abweichung von nomineller Geometrie zu groß ist, wird vermieden. Daraus ergeben sich direkte Kosteneinsparungen in Form von "Mannstunden", ein sicherer Serienanlauf und eine steilere Anlaufkurve.

Das Prinzip des Verfahrens zur Reduzierung aus den Bördeloperationen und dem anschließenden KTL-Durchlauf resultierender geometrischer Abweichungen von Karosserieanbauteilen wird nachfolgend anhand der einzigen Figur in mehreren Schritten erläutert.

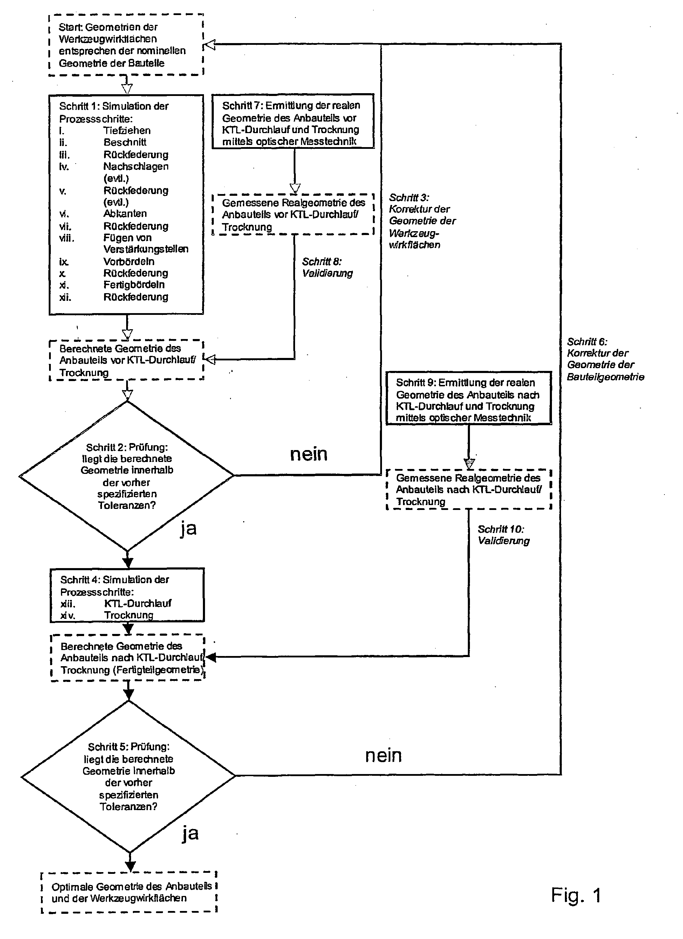

Figur 1 zeigt dabei in Form eine Programmablaufplans die einzelnen Schritte des Verfahrens.

Die in Figur 1 angegebenen arabischen Ziffern "1" bis "10" entsprechen dabei den nachfolgenden Schritten "Schritt 1" bis "Schritt 10", wo dies nicht ausdrücklich angegeben ist.

Im "Schritt 1" erfolgt eine Simulation der Prozessschritte wie Tiefziehen, Beschnitt, Nachschlagen (je nach Einzelteil), Abkanten, Fügen der Verstärkungsteile für das jeweilige in das Anbauteil eingehende Einzelteil. Im Falle einer Haube sind dies die Haut der Haube und das Gerippe der Haube. Auch das Fügen der Einzelteile durch Vor- und Fertigbördeln zählt zu den hier zu simulierenden Prozessschritten. Nach den Prozessschritten Beschnitt, Nachschlagen, Abkanten, Vor- und Fertigbördeln ist jeweils ebenfalls die in der Realität auftretende Rückfederung zu simulieren. Die Simulation kann mit einem kommerziell erhältlichen Finite-Element-Simulationssystem erfolgen. Die verwendeten Geometrien der Werkzeugwirkflächen entsprechen beim ersten Durchlauf des Verfahrens den jeweiligen nominellen Geometrien der zu fertigenden Einzelteile. Das Ergebnis dieser Simulation ist die mit den verwendeten Wirkflächengeometrien der Werkzeuge erzielbare Geometrie des Anbauteils. Bei der Simulation der einzelnen Prozessschritte sind möglichst auch die aus dem jeweils vorangehenden Prozessschritt resultierenden Dehnungs-, Spannungs- und Blechdickenverteilungen zu berücksichtigen.

In "Schritt 2" erfolgt eine Prüfung, ob die in "Schritt 1" berechnete Geometrie des Anbauteils innerhalb der zuvor spezifizierten Toleranzen liegt. Die Prüfung erfolgt auf Basis eines punktweisen Vergleichs der berechneten Geometrie und der nominellen Geometrie, die in Gestalt der CAD-Daten aus der Konstruktion des Anbauteils vorliegt. Liegt die berechnete Geometrie innerhalb der Toleranzen, fährt das Verfahren gleich mit "Schritt 4" fort. Liegt die Geometrie nicht innerhalb der Toleranzen, erfolgt im Rahmen von "Schritt 3" eine geeignete Korrektur der Werkzeugwirkflächen sowie ein erneuter Durchlauf von "Schritt 1". Die Schritte 1 bis 3 werden so lange iteriert, bis die berechnete Geometrie des gefertigten Anbauteils innerhalb der Toleranzen liegt.

In "Schritt 3" erfolgt die bereits obenstehend erwähnte Korrektur der Werkzeugwirkflächen. Die Korrektur beruht auf den zuvor punktweise ermittelten Abweichungen der berechneten Geometrie des Anbauteils von seiner nominellen Geometrie. Die Korrektur erfolgt durch eine punktweise Verschiebung der Geometrie der Werkzeugwirkflächen entlang von zuvor ermittelten Vektoren. Die Ermittlung der Verschiebungsvektoren erfolgt mit Hilfe geeigneter Algorithmen. In "Schritt 3" wird vorzugsweise die Wirkflächengeometrie der Vorbördelwerkzeuge korrigiert, da diese nach der der Erfindung zugrunde liegenden Erkenntnis einen sehr großen Einfluss auf die Geometrie des Anbauteils besitzt.

In "Schritt 4" erfolgt eine Simulation des KTL-Durchlaufs und der anschließenden Ofentrocknung. Dazu ist das dem "Schritt 1" zugrundeliegende Simulationsmodell um eine geeignete Modellierung der Bördelflansch- und Unterfütterungskleber zu ergänzen. Die Temperaturabhängigkeit der mechanischen Eigenschaften der Kleber ist mit einem geeigneten Materialgesetz abzubilden.

In "Schritt 5" erfolgt eine Prüfung, ob die in "Schritt 4" berechnete Geometrie des Anbauteils innerhalb der zuvor spezifizierten Toleranzen liegt. Die Prüfung erfolgt auf Basis eines punktweisen Vergleichs der berechneten Geometrie und der nominellen Geometrie, die in Gestalt der CAD-Daten des Anbauteils vorliegt. Liegt die berechnete Geometrie innerhalb der Toleranzen, wird das Verfahren beendet; die optimale Geometrie der Werkzeugwirkflächen und des Anbauteils sind damit ermittelt. Liegt die Geometrie nicht innerhalb der Toleranzen, erfolgt im Rahmen von "Schritt 6" eine geeignete Korrektur der Bauteilgeometrie sowie ein erneuter Durchlauf der Schritte 1 bis 4. Die Schritte 1 bis 6 werden so lange iteriert, bis die berechnete Geometrie des Anbauteils innerhalb der zulässigen Toleranzen liegt.

In "Schritt 6" erfolgt ein Korrektur der Geometrie des Anbauteils. Die Korrektur beruht auf den zuvor punktweise ermittelten Abweichungen der berechneten Geometrie des Anbauteils von seiner nominellen Geometrie. Die Korrektur erfolgt durch eine punktweise Verschiebung der nominellen Geometrie entlang von zuvor ermittelten Vektoren. Das Ergebnis ist eine Hilfsgeometrie. Dabei erfolgt die Korrektur in der Form, dass sich die Hilfsgeometrie des Anbauteils während des KTL-Durchlaufs und der anschließenden Trocknung so verformt, dass die entstehenden Maß- und Formabweichungen des lackierten Fertigteils von der nominellen Geometrie minimiert werden. Die Ermittlung der Verschiebungsvektoren erfolgt mit Hilfe geeigneter Algorithmen.

In "Schritt 7" erfolgt eine Ermittlung der realen Geometrie des Anbauteils vor KTL-Durchlauf und Trocknung mittels optischer Messtechnik.

In "Schritt 8" erfolgt eine Validierung der Simulationsergebnisse aus "Schritt 1" durch einen punktweisen Vergleich der berechneten Geometrie mit der in "Schritt 7" ermittelten Realgeometrie.

In "Schritt 9" erfolgt eine Ermittlung der realen Geometrie des Anbauteils nach KTL-Durchlauf und Trocknung mittels optischer Messtechnik.

Gemäß "Schritt 10" werden die Simulationsergebnisse aus "Schritt 4" durch einen punktweisen Vergleich der berechneten Geometrie mit der in "Schritt 8" ermittelten Realgeometrie validiert.

## Patentansprüche

1. Verfahren zum Herstellen eines zunächst umgeformten und anschließend unter Wärmeeinwirkung oberflächenbehandelten Bauteils einer Karosserie eines Kraftfahrzeugs, wobei das Bauteil wenigstens ein metallisches Bauelement aufweist und wobei das Verfahren die folgenden Schritte aufweist:
a) Vorsehen von Werkzeuggeometriedaten von für das Umformen zu verwendenden Werkzeugen, von nominellen Geometriedaten des Bauteils sowie von zulässigen Toleranzen dieser nominellen Geometriedaten des Bauteils,
b) Simulieren der Prozessschritte des Umformens unter Verwendung der Werkzeuggeometriedaten sowie Berechnen der danach zu erwartenden Geometriedaten des Bauteils,
c) Überprüfen, ob die zu erwartenden Geometriedaten des Bauteils im zulässigen Toleranzbereich der nominellen Geometriedaten des Bauteils liegen,
d) solange im Schritt c) festgestellt worden ist, dass die zu erwartenden Geometriedaten des Bauteils NICHT im zulässigen Toleranzbereich der nominellen Geometriedaten des Bauteils liegen,
Verändern der Werkzeuggeometriedaten und Erzeugen von korrigierten Werkzeuggeometriedaten und anschließendes erneutes Durchführen der Schritte b) und c) unter Verwendung der korrigierten Werkzeuggeometriedaten,
e) Simulieren der Prozessschritte des Oberflächenbehandelns unter Wärmeeinwirkung sowie Berechnen der danach zu erwartenden Geometriedaten des Bauteils,
f) Überprüfen, ob die zu erwartenden Geometriedaten des Bauteils im zulässigen Toleranzbereich der nominellen Geometriedaten des Bauteils liegen,
g) solange im Schritt f) festgestellt wird, dass die zu erwartenden Geometriedaten des Bauteils NICHT im zulässigen Toleranzbereich der nominellen Geometriedaten des Bauteils liegen,
Verändern der nominellen Geometriedaten des Bauteils und Erzeugen von korrigierten Geometriedaten des Bauteils und anschließendes erneutes Durchführen der Schritte b) bis f) unter Verwendung der korrigierten Geometriedaten des Bauteils anstelle der nominellen Geometriedaten des Bauteils,
h) Beginnen mit einer Fertigung des Bauteils unter Verwendung der korrigierten Geometriedaten des Bauteils sowie der korrigierten Werkzeuggeometriedaten.

2. Verfahren nach Patentanspruch 1, **dadurch gekennzeichnet, dass** nach dem Schritt b) und vor dem Schritt d) ein erster Validierungslauf als Einzelfertigung des Bauteils unter Verwendung der nominellen Geometriedaten bzw. gegebenenfalls der korrigierten Geometriedaten des Bauteils sowie unter Verwendung der Werkzeuggeometriedaten bzw. gegebenenfalls der korrigierten Werkzeuggeometriedaten vorgesehen ist.

3. Verfahren nach Patentanspruch 1 oder Patentanspruch 2, **dadurch gekennzeichnet, dass** nach dem Schritt f) und vor dem Schritt h) ein zweiter Validierungslauf als Einzelfertigung des Bauteils unter Verwendung der nominellen Geometriedaten bzw. gegebenenfalls der korrigierten Geometriedaten des Bauteils sowie unter Verwendung der Werkzeuggeometriedaten bzw. gegebenenfalls der korrigierten Werkzeuggeometriedaten vorgesehen ist.

4. Verfahren nach einem der vorhergehenden Patentansprüche, **dadurch gekennzeichnet, dass** die realen und simulierten Prozessschritte des Umformens eines oder mehrere der folgenden Bearbeitungsverfahrensarten beinhalten: Tiefziehen, Nachschlagen, Abkanten, Fügen, Vorbördeln, Fertigbördeln.

5. Verfahren nach Patentanspruch 4, **dadurch gekennzeichnet, dass** bei der Simulation der einzelnen Prozessschritte des Umformens die aus dem jeweils vorangehenden Prozessschritt resultierenden Dehnungs-, Spannungs- und Blechdickenverteilungen berücksichtigt werden.

6. Verfahren nach einem der vorhergehenden Patentansprüche, **dadurch gekennzeichnet, dass** die realen und simulierten Prozessschritte des Oberflächenbehandelns unter Wärmeeinwirkung eines oder mehrere der folgenden Bearbeitungsverfahrensarten beinhalten: Bördelfalzversiegelung mit einer Vorvernetzung und/oder einer Aushärtung einer dazu verwendeten Versiegelungsmasse bzw. eines Bördelfalzklebstoffs, kataphoretisches Tauchlackieren, Ofentrocknen.

7. Verfahren nach einem der vorhergehenden Ansprüche, **dadurch gekennzeichnet, dass** anstelle der nominellen Geometriedaten des Bauteils Daten einer Hilfsgeometrie des Bauteils bereitgestellt werden, und zwar in der Form, dass sich die Hilfsgeometrie des Bauteils während der Wärmebeaufschlagung so verformt, dass die dabei entstehenden Maß- und Formabweichungen des fertigen Bauteils von der nominellen Geometrie verkleinert oder minimiert werden.

## Claims

1. Method for the production of a structural part of a body of a motor vehicle that is firstly deformed and then subjected to surface treatment with thermal action, wherein the structural part has at least one metal structural element, and wherein the method has the following steps:
a) providing tool geometric data of tools to be used for the deformation, nominal geometric data of the structural part and also permissible tolerances of these nominal geometric data of the structural part,
b) simulating the process steps of the deformation using the tool geometric data and also calculating the geometric data of the structural part to be expected thereafter,
c) checking whether the geometric data of the structural part to be expected lie in the permissible tolerance range of the nominal geometric data of the structural part,
d) as long as it has been established in step c) that the geometric data of the structural part to be expected do NOT lie in the permissible tolerance range of the nominal geometric data of the structural part, changing the tool geometric data and generating corrected tool geometric data and then conducting steps b) and c) again using the corrected tool geometric data,
e) simulating the process steps of the surface treatment with thermal action and also calculating the geometric data of the structural part to be expected thereafter,
f) checking whether the geometric data of the structural part to be expected lie in the permissible tolerance range of the nominal geometric data of the structural part,
g) as long as it has been established in step f) that the geometric data of the structural part to be expected do NOT lie in the permissible tolerance range of the nominal geometric data of the structural part, changing the nominal geometric data of the structural part and generating corrected geometric data of the structural part and then conducting steps b) to f) again using the corrected geometric data of the structural part in place of the nominal geometric data of the structural part,
h) starting with a production of the structural part using the corrected geometric data of the structural part and also the corrected tool geometric data.

2. Method according to claim 1, **characterised in that** after step b) and before step d) a first validation procedure is provided as single-piece production of the structural part using the nominal geometric data or, if necessary, the corrected geometric data of the structural part and also using the tool geometric data or, if necessary, the corrected tool geometric data.

3. Method according to claim 1 or claim 2, **characterised in that** after step f) and before step h) a second validation procedure is provided as single-piece production of the structural part using the nominal geometric data or, if necessary, the corrected geometric data of the structural part and also using the tool geometric data or, if necessary, the corrected tool geometric data.

4. Method according to one of the preceding claims, **characterised in that** the real and simulated process steps of the deformation include one or more of the following types of machining process: deep-drawing, sizing, edge bending, joining, rough edging, finish-edging.

5. Method according to claim 4, **characterised in that**, during the simulation of the individual process steps of the deformation, the elongation, stress and panel thickness distributions resulting from the respective preceding process step are taken into consideration.

6. Method according to one of the preceding claims, **characterised in that** the real and simulated process steps of the surface treatment with thermal action include one or more of the following types of machining process: edge fold sealing with a pre-wetting operation and/or a curing operation of a sealing compound used for this or an edge fold adhesive, cataphoretic dip-coating, oven drying.

7. Method according to one of the preceding claims, **characterised in that** instead of the nominal geometric data of the structural part, data of an auxiliary geometry of the structural part are provided, i.e. such that the auxiliary geometry of the structural part is deformed during the application of heat so that the deviations in dimension and shape of the finished structural part from the nominal geometry occurring during this are reduced or minimised.

## Revendications

1. Procédé pour fabriquer un composant, d'abord façonné et ensuite traité en surface sous l'effet de la chaleur, d'une carrosserie d'un véhicule, le composant présentant au moins un élément métallique et le procédé présentant les étapes suivantes :
a) prévision de données de géométrie d'outil, d'outils à utiliser pour le façonnage, de données de géométrie nominales du composant et de tolérances autorisées de ces données de géométrie nominales du composant,
b) simulations des étapes de processus du façonnage avec l'utilisation des données de géométrie d'outil et calcul des données de géométrie à escompter ensuite du composant,
c) vérification pour savoir si les données de géométrie à escompter du composant se situent dans la plage de tolérances autorisée des données de géométrie nominales du composant,
d) aussi longtemps qu'on a constaté à l'étape c) que les données de géométrie à escompter du composant ne se situent pas dans la plage de tolérances autorisée des données de géométrie nominales du composant,
modification des données de géométrie d'outil et génération de données de géométrie d'outil corrigées suivie d'une mise en oeuvre renouvelée des étapes b) et c) avec utilisation des données de géométrie d'outil corrigées,
e) simulation des étapes de processus du traitement de surface sous l'effet de la chaleur et calcul des données de géométrie à escompter du composant,
f) vérification pour savoir si les données de géométrie à escompter du composant se situent dans la plage de tolérances autorisée des données de géométrie nominales du composant,
g) aussi longtemps que l'on constate à l'étape f) que les données de géométrie à escompter du composant ne se situent pas dans la plage de tolérances autorisée des données de géométrie nominales du composant,
modification des données de géométrie nominales du composant et génération de données de géométrie corrigées du composant suivie d'une mise en oeuvre renouvelée des étapes b) à f) avec utilisation des données de géométrie corrigées du composant au lieu des données de géométrie nominales du composant,
h) démarrage d'une fabrication du composant avec utilisation des données de géométrie corrigées du composant et des données de géométrie d'outil corrigées.

2. Procédé selon la revendication 1, **caractérisé en ce que**, après l'étape b) et avant l'étape d), il est prévu un premier passage de validation comme fabrication individuelle du composant avec utilisation des données de géométrie nominales et éventuellement des données de géométrie corrigées du composant ainsi qu'avec l'utilisation des données de géométrie d'outil et éventuellement des données de géométrie d'outil corrigées.

3. Procédé selon la revendication 1 ou la revendication 2, **caractérisé en ce que**, après l'étape f) et avant l'étape h), il est prévu un second passage de validation comme fabrication individuelle du composant avec utilisation des données de géométrie nominales et éventuellement des données de géométrie corrigées du composant ainsi qu'avec l'utilisation des données de géométrie d'outil et éventuellement des données de géométrie corrigées.

4. Procédé selon l'une quelconque des revendications précédentes, **caractérisé en ce que** les étapes de processus réelles et simulées du façonnage contiennent un ou plusieurs des types de procédé de traitement suivants : emboutissage profond, ré-étirage, pliage, assemblage, pré-bordage, bordage de finition.

5. Procédé selon la revendication 4, **caractérisé en ce que**, lors de la simulation des étapes de processus individuelles du façonnage, les répartitions de dilatation, de tension et d'épaisseur de tôle résultant de l'étape de processus respectivement précédente sont prises en compte.

6. Procédé selon l'une quelconque des revendications précédentes, **caractérisé en ce que** les étapes de processus réelles et simulées du traitement de surface contiennent un ou plusieurs des types de procédé de traitement suivants sous l'effet de la chaleur : scellement du collet rabattu de bordure avec une pré-réticulation et/ou un durcissement d'une masse de scellement utilisée à cet effet ou d'une colle du collet rabattu de bordure, vernissage au trempé cataphorétique, séchage au four.

7. Procédé selon l'une quelconque des revendications précédentes, **caractérisé en ce que**, au lieu des données de géométrie nominales du composant, des données d'une géométrie auxiliaire du composant sont mises à disposition, et ce sous une forme telle que la géométrie auxiliaire du composant se déforme pendant la sollicitation de la chaleur de telle sorte que les écarts de cote et de forme en résultant du composant fabriqué par rapport à la géométrie nominale sont réduits ou minimisés.
